# EUROPÄISCHE PATENTSCHRIFT

(11) **EP 0 834 066 B1**
(45) Veröffentlichungstag und Bekanntmachung des Hinweises auf die Patenterteilung: **06.11.2002**
(21) Anmeldenummer: 97920655.4
(22) Anmeldetag: 11.04.1997
(51) Int. Cl.: G01N 21/55, G01N 21/77

(54) **VERFAHREN UND EINRICHTUNG ZUM NACHWEIS PHYSIKALISCHER, CHEMISCHER, BIOLOGISCHER ODER BIOCHEMISCHER REAKTIONEN UND WECHSELWIRKUNGEN**
PROCESS AND DEVICE FOR DETECTING PHYSICAL, CHEMICAL, BIOLOGICAL OR BIOCHEMICAL REACTIONS AND INTERACTIONS
PROCEDE ET DISPOSITIF PERMETTANT DE METTRE EN EVIDENCE DES REACTIONS ET DES INTERACTIONS D'ORDRE PHYSIQUE, CHIMIQUE, BIOLOGIQUE OU BIOCHIMIQUE

(30) Priorität: 19.04.1996 DE 19615366
(43) Veröffentlichungstag der Anmeldung: 08.04.1998
(73) Patentinhaber: CARL ZEISS JENA GmbH, 07745 Jena (DE)
(72) Erfinder: DOBSCHAL, Hans-Jürgen, D-07749 Jena (DE); FUCHS, Werner, D-07751 Cospeda (DE); GRÄFE, Dieter, D-07745 Jena (DE); GAUGLITZ, Günter, D-72070 Tübingen (DE); BRECHT, Andreas, D-72827 Mannweil (DE)
(74) Vertreter: Geyer, Werner, Dr.-Ing.
(86) Internationale Anmeldenummer: EP9701809
(87) Internationale Veröffentlichungsnummer: WO97040366

(56) Entgegenhaltungen:
- EP-A- 0 617 273
- WO-A-95/03538
- WO-A-95/22754
- US-A- 4 626 684
- US-A- 5 234 665
- US-A- 5 313 264

## Beschreibung

Die Erfindung bezieht sich auf ein Verfahren zum Nachweis physikalischer, chemischer und/oder biochemischer Reaktionen und Wechselwirkungen an und/oder in Proben, die auf einer Substratplatte mit Trägerschicht einer Trägerplatte angeordnet sind und über Einkoppelelemente mit Licht bestrahlt werden. Sie bezieht sich weiter auf eine Einrichtung zum Nachweis physikalischer, chemischer und/oder biochemischer Reaktionen und Wechselwirkungen an und/oder in Proben, umfassend eine Lichtquelle und dieser nachgeordnete, das Licht kollimierende optische Elemente und diesen nachgeordnete Einkoppelelemente, einer matrixförmigen Anordnung der zu untersuchenden Proben, derart, daß eine Bestrahlung aller Proben gleichzeitig realisierbar ist, erste optische Mittel, die das Licht der Lichtquelle auf die Proben lenken und zweite optische Mittel, die das von jeder Probe reflektierte und durch jede Probe beeinflußtes Licht auf eine nachgeordnete, aus matrixartig angeordneten fotoelektrischen Empfängern bestehenden Detektoranordnung oder eine Videokamera zur ortsaufgelösten Detektion der von jeder Probe reflektierten und durch jede Probe beeinflußten Lichtes leiten, wobei die Detektoranordnung mit einer Auswerteeinrichtung verbunden ist. Sie basiert sowohl auf den durch evaneszente Felder angeregten Resonanzphänomenen in planaren Wellenleitern und dünnen Metallfilmen, die auf Änderungen oder Anlagerungen einer darüber befindlichen biosensitiven Schicht reagieren, als auch auf Interferenzerscheinungen, die durch Reflexion an den Grenzflächen dieser Schicht entstehen.

Aus der WO-A-93/74392 ist eine Einrichtung zum Nachweis derartiger Reaktionen und Wechselwirkungen bekannt, bei welcher kollimiertes, polychromatisches Licht an einer inneren Prismenfläche totalreflektiert wird. Das dabei entstehende evaneszente Feld koppelt bei geeigneter Wahl der Parameter einer Abstandsund einer darüberliegenden Cavityschicht in letztere resonanzartig ein, wobei in Abhängigkeit von der Probenwechselwirkung über der Cavityschicht die Resonanz bei unterschiedlicher Wellenlänge erfolgt. In einer nachgeschalteten wellenlängendispersiven Einheit wird die Resonanzwellenlänge als Extremwert im Spektrum bestimmt.

Eine weitere Einrichtung zum Nachweis biochemischer Interaktionen ist aus der EP-A-0 257 955 bekannt. Auch hier wird polychromatisches Licht über eine Vielfachprismenstruktur in eine transparente Platte eingekoppelt und dort mit einem Einfallswinkel, welcher größer als der kritische Winkel ist, zur Totalreflexion gebracht. Die senkrecht schwingende Polarisationskomponente des evaneszenten Feldes regt in einer auf der Grenzfläche aufgebrachten dünnen Metallschicht kollektive Elektronendichteschwingungen (Oberflächenplasmonen) an. Diese Resonanzerscheinung wird durch Veränderungen an der Grenzfläche, die durch die Beschaffenheit der Probe bedingt ist, beeinflußt und als Absorption der jeweiligen Resonanzwellenlänge in einer nachgeordneten dispersiven Einrichtung detektiert. Durch Veränderungen an der Grenzfläche, die durch die Beschaffenheit der Probe bedingt sind, ergibt sich somit eine Verschiebung des Reflexionsminimums, die ein Kriterium für die Beschaffenheit der untersuchten Probe ist.

In der WO-A-93/01487 ist eine Anordnung zum selektiven Nachweis von Substanzen in chemischen, biochemischen und biologischen Meßproben durch Bestimmung von Änderungen der effektiven Brechzahl eines geführten Modes mit Hilfe eines Gitterkopplers beschrieben. Der Gitterkoppler ist auf einer durchsichtigen Substratplatte in der Grenzfläche zu einem aufgebrachten planaren Wellenleiter angeordnet und übernimmt sowohl die Funktionen der Strahlenein- als auch der Strahlenauskopplung. Die Koppeleffizienz der gesamten Anordnung hängt ab von der Polarisation, dem Einfallswinkel, den Wellenleitereigenschaften, den Gittereigenschaften und von dem Brechungsindex oberhalb des Wellenleiters. Im Einkoppeloptimum wird ein Mode im Wellenleiter angeregt, und die Reflektivität des Gitterkopplers erreicht bei einem bestimmten Koppelwinkel ein Minimum, das mit einem positionsempfindlichen Detektor aufgenommen wird.

Aus der DE-A-42 00 088 sind ein Verfahren und eine Vorrichtung zum Nachweis physikalischer, chemischer, biochemischer und biologischer Vorgänge bekannt, wobei Licht geeigneter Wellenlänge oder eines geeigneten Spektralbereiches auf eine Probe eingestrahlt wird, an der der Vorgang an oder in mindestens einer dünnen Schicht aus mindestens teilweise optisch transparentem Material abläuft. Es werden dabei die durch den Vorgang hervorgerufenen Interferenzerscheinungen detektiert und gemessen, die als Änderung der optischen Schichtdicke interpretiert und dargestellt werden können. Dabei läßt sich die absolute optische Schichtdicke aus der spektralen Lage der Interferenzextrema und deren Abständen voneinander berechnen. Auch aus der Intensitätsänderung bei einer oder mehreren Wellenlängen läßt sich die optische Schichtdicke bestimmen. Eine Vorrichtung zur Durchführung des Verfahrens umfaßt eine Lichtquelle, die Weißlicht aussendet, eine Probeneinrichtung, an der der zu untersuchende Vorgang durchgeführt werden kann, einen Detektor, beispielsweise ein Array fotoelektrischer Empfänger, sowie eine Auswerteeinrichtung, z. B. ein Computer. Dabei weist die Probeneinrichtung eine Unterlage mit einer einen dünnen Polymerfilm (z. B. Polysiloxanfilm) umfassenden Trägerschicht auf, in der der nachzuweisende Vorgang stattfindet. Die Unterlage kann ein Glasplättchen, ein handelsübliches interferenzfilter oder ein geeignetes Substrat sein.

Allen diesen Einrichtungen haftet gemeinsam der Nachteil an, daß mit ihnen nur Einzelmessungen ausgeführt werden können. Zur gleichzeitigen Messung einer Vielzahl von Proben würde der technische Aufwand sich wesentlich erhöhen. Es ist nur eine Erweiterung dieser Messungen auf wenige parallele Meßobjekte und Proben möglich. Ein Beispiel einer solchen Einrichtung ist in der WO-A-93/25 909 beschrieben und dargestellt, mit welcher vier Proben ausgemessen werden können.

Ein weiterer Nachteil besteht darin, daß bei Anordnungen mit winkelselektiver Lichteinstrahlung bzw. Strahleinkopplung ein Übergang zur simultanen Vermessung einer Vielzahl von Proben in aufwendiger Weise eine Vervielfachung der Koppelstruktur erforderlich ist, wie es auch in der WO-A-92/0542 veranschaulicht ist.

Eine solche Vorrichtung für eine Vielzahl von Proben ist aus der WO-A-95/22754 bekannt, die eine optische Analysevorrichtung für eine eine Kammerstruktur aufweisende Mikrotiter-Platte beschreibt. Die Kammern sind matrixförmig angebracht, wobei in jeder Kammer eine Probe angeordnet ist. Zur Überwachung von den in den einzelnen Kammern ablaufenden Vorgängen wird das Prinzip der totalen internen Reflexion ausgenutzt. Jede Kammer ist als Prisma ausgebildet, so daß alle Proben gleichzeitig beleuchtet werden können. Das Licht wird an der Unterseite jeder Kammer eingestrahlt und kann dort an einer aufgebrachten Schicht reflektiert werden. Je nach Ausbildung wird entweder die reflektierte Intensität überwacht oder die Intensität als Funktion des Einfallswinkels des Licht aufgenommen, während in den Kammern Reaktionen ablaufen.

Aus der US-A-4,626,684 ist eine optische Auswertevorrichtung für Fluoreszenz, wie sie beispielsweise bei einem ELISA-Test auftritt, bekannt. In einem Monochromator wird Licht bestimmter Wellenlänge erzeugt und über eine Faseroptik nacheinander in jede Kammer einer Mikrotiter-Platte zur Anregung eingestrahlt. Die einzelnen Kammern werden nacheinander abgetastet, um dort entstandene Fluoreszenzstrahlung mit einer Faseroptik aufzunehmen und einem Detektionsmonochromator zur Analyse zuzuführen.

Der Erfindung liegt die Aufgabe zugrunde, ein Verfahren und eine Einrichtung zum simultanen Nachweis physikalischer, chemischer, und/oder biochemischer Reaktionen und Wechselwirkungen an oder in der Oberfläche von Proben zu schaffen, so daß mit geringem technischen Aufwand und hoher Präzision an einer Vielzahl von Proben ein Spektrum der an mindestens einer Grenzfläche der Proben reflektierten Strahlungsintensitäten ermittelbar ist, aus welchem Parameter zur Beschaffenheit der Proben bestimmbar sind, wobei ein hoher Parallelisierungsgrad der Messungen erzielbar sein soll.

Erfindungsgemäß wird diese Aufgabe bei einem Verfahren zum Nachweis physikalischer, chemischer und/oder biochemischer Reaktionen und Wechselwirkungen an Proben, die auf einer Substratplatte mit Trägerschicht einer Trägerplatte angeordnet sind und über Einkoppelelemente mit Licht bestrahlt werden, gelöst durch Beleuchtung einer flächenhaften Anordnung von zu untersuchenden Proben mit Licht einer durchstimmbaren Lichtquelle oder eines scannenden Monochromators, der einer polychromatischen Lichtquelle nachgeordnet ist, wobei eine zeitlich aufgelöste Beleuchtung mit Licht unterschiedlicher Wellenlängen erfolgt, Abbildung des an mindestens einer Grenzfläche einer jeden Probe reflektierten Strahlenanteils oder der an in Lichtrichtung hintereinander liegenden Begrenzungsfläche einer jeden Probe reflektierten und interferierenden Strahlenanteile bzw. Interferenzen durch optische Elemente auf ein ortsauflösendes, flächenhaftes Detektorarray oder eine Videokamera, gemäß der zeitlich aufgelösten Beleuchtung Wellenlänge selektive Detektion der durch die Proben beeinflußten reflektierten Strahlungsintensitäten bzw. der Intensitäten der abgebildeten Interferenzen, Ermittlung der einer jeden Probe zugeordneten Intensität und des einer jeden Probe zugeordneten Wellenlängespektrums und Ableitungen von Parametern, die die zu untersuchenden Wechselwirkungen und Reaktion an und/oder in den einzelnen Proben kennzeichnen.

Erfindungsgemäß wird diese Aufgabe bei einer Einrichtung zum Nachweis physikalischer, chemischer und/oder biochemischer Reaktionen und Wechselwirkungen an und/oder in Proben, umfassend eine Lichtquelle und dieser nachgeordnete, das Licht kollimierende optische Elemente und diesen nachgeordnete Einkoppelelemente, einer matrixförmigen Anordnung der zu untersuchenden Proben, derart, daß eine Bestrahlung aller Proben gleichzeitig realisierbar ist, erste optische Mittel, die das Licht der Lichtquelle auf die Proben lenken und zweite optische Mittel, die das von jeder Probe reflektierte und durch jede Probe beeinflußtes Licht auf eine nachgeordnete, aus matrixartig angeordneten fotoelektrischen Empfängern bestehenden Detektoranordnung oder eine Videokamera zur ortsaufgelösten Detektion der von jeder Probe reflektierten und durch jede Probe beeinflußten Lichtes leiten, wobei die Detektoranordnung mit einer Auswerteeinrichtung verbunden ist, gelöst durch die Kombination folgender Merkmale: eine unstrukturierte Substratplatte oder eine Trägerplatte, auf der die Vielzahl der zu untersuchenden Proben matrixartig angeordnet ist, wobei zumindest die der Substratplatte bzw. Trägerplatte zugewandte Begrenzungsfläche der Proben zumindest teilreflektierend oder teilweise reflektierend ist, die Lichtquelle sendet Licht mindestens einer Wellenlänge aus, wobei die Bestrahlung aller Proben wellenlängenselektiv realisierbar ist, und die Detektoranordnung oder die Videokamera nimmt die von jeder Probe reflektierte, über einen bestimmten Spektralbereich beeinflußte und von Resonanzlage bzw. Schichtdicke der jeweiligen Probe abhängende Strahlungsintensität ortsaufgelöst auf.

Gemäß dem Verfahren werden alle Proben gleichzeitig mit Licht einer Wellenlänge bestrahlt und das reflektierte Licht einem Empfängerarray, z. B. einer CCD-Matrix oder einer Videokamera, zugeführt, und die erzeugten elektrischen Signale werden in einer Auswerteeinrichtung, die mit dem Empfängerarray verbunden ist, zur Meßwertgewinnung weiterverarbeitet. Nachdem alle Proben mit der einen Wellenlänge ausgewertet sind, werden alle Proben mit Licht einer anderen Wellenlänge bestrahlt, und es werden wieder in der oben beschriebenen Weise Meßwerte von den Reaktionen, Wechselwirkungen und/oder von der Beschaffenheit der Proben gewonnen. Auf die beschriebene Weise wird das gesamte Spektrum des von der Lichtquelle bereitgestellten Lichtes zu den Messungen herangezogen. Um alle Wellenlängen eines verwendeten Wellenlängenbereiches nacheinander zur Verfügung zu haben, ist es vorteilhaft, eine durchstimmbare Lichtquelle oder einen scannenden Monochromator, der der polychromatischen Lichtquelle nachgeordnet ist, zur Probenbeleuchtung zu verwenden, beispeilsweise ein LyotFilter.

Eine erfindungsgemäße Einrichtung zur Durchführung des Verfahrens umfaßt eine Lichtquelle, die Licht mindestens einer Wellenlänge aussendet, welches über erste optische Elemente und diesen nachgeordnete Einkoppelelemente zur Bestrahlung auf die zu untersuchenden Proben geleitet wird, wobei die Proben auf einer mit einer transparenten Trägerplatte verbundenen Substratplatte angeordnet sind.

Es sind zweite optische Elemente oder Mittel vorgesehen, die das von der Trägerplatte reflektierte und durch die Probe beeinflußte Licht auf eine nachgeordnete, aus photoelektrischen Empfängern bestehende Detektoranordnung leiten, wobei die Detektoranordnung mit einer Auswerteeinrichtung verbunden ist. Bei dieser Einrichtung ist auf einer strukturierten Substratplatte der Trägerplatte oder direkt auf der Trägerplatte selbst eine große Anzahl von zu untersuchenden Proben angeordnet. Dabei ist es wesentlich, daß zumindest die der Substratplatte oder der Trägerplatte zugewandte Begrenzungsfläche der Proben mindestens teilweise reflektierend oder teilreflektierend ist. Die Positionen der zu untersuchenden Proben auf der Substratplatte oder der Trägerplatte sind matrixförmig angeordnet, in der Weise, daß eine Bestrahlung aller Proben gleichzeitig und wellenlängenselektiv realisiert wird. Die Detektoranordnung besteht aus matrixartig angeordneten fotoelektrischen Empfängern, z. B. CCD-Elementen, oder sie ist eine Videokamera. Wesentlich ist, daß die Detektoranordnung eine ortsaufgelöste Detektion der von jeder Probe reflektierten, und durch diese beeinflußten Strahlungsintensität ermöglicht.

Die erfindungsgemäße Einrichtung erlaubt die Auswahl von mehr als einer Beobachtungswellenlänge und die Zuordnung der Reflektivitäten der einzelnen Proben zu Positionen der Proben auf der Substratplatte. Aus den Änderungen im spektralen Reflexionsvermögen können auch unter Hinzuziehung von in einem Referenzstrahlengang erzeugter Referenzsignale in sehr vorteilhafter Weise biochemische, physikalische und/oder chemische Prozesse in der Probe detektiert und quantifiziert werden. Insbesondere sind dies Bindungsreaktionen, die eine Anlagerung von Molekülen aus der Probe an eine auf der Substratplatte angeordnete Sensorschicht bewirken, was zu einer lokalisierten Zunahme der Schichtdicke oder des Brechungsindexes führt.

Es ist vorteilhaft, wenn die in Lichtrichtung hintereinanderliegenden Begrenzungsflächen der Proben mindestens teilreflektierend sind. Dadurch wird es möglich, Interferenzen, die sich aus der Schichtdicke der untersuchten Probe ergeben, auszuwerten. Diese Interferenzen entstehen aus den an den Begrenzungsflächen reflektierten Strahlenanteilen und werden auf die Detektoranordnung abgebildet und durch eine nachgeordnete Auswerteeinrichtung zur Ermittlung von Probenparametern weiterverarbeitet.

Eine weitere vorteilhafte Anordnung ergibt sich, wenn die in Lichtrichtung hintereinanderliegenden optisch wirksamen Begrenzungsflächen der Trägerplatte parallel verlaufen oder einen kleinen Winkel einschließen und durchlässig verspiegelt sind. Insbesondere bei der Variante mit der keilförmigen Trägerplatte ist es in einfacher Weise möglich, einen Referenzstrahlengang zu erzeugen, der einer separaten Detektoranordnung oder alternierend zu einem Meßstrahlengang ein und derselben Detektoranordnung zugeführt wird. Bei dieser Ausführung der keilförmigen Trägerplatte wird aus den an der in Lichtrichtung ersten (vorderen) Begrenzungsfläche reflektierten Strahlen ein Referenzstrahlengang und aus den an den Begrenzungsflächen reflektierten und durch die Proben beeinflußten Strahlen gebildeten Interferenzen oder Reflexionen ein Meßstrahlengang erzeugt, welche dann einer gemeinsamen oder zwei gesonderten Detektoranordnungen zugeleitet werden. Der Trägerplatte kann auch ein teleskopisches Abbildungssystem zur Abbildung des Meß- und Referenzstrahlenganges auf eine Blendenanordnung bzw. direkt auf die Detektoranordnung nachgeordnet sein, wobei die Blendenanordnung der Detektoranordnung vorgeschaltet ist. Bei Abbildung beider Strahlengänge auf eine Detektoranordnung ist die Biendenanordnung umschaltbar zu gestalten, um alternierend Meß- und Referenzstrahlengang auf die Detektoranordnung zeitlich versetzt zu erhalten.

Der Referenzstrahl erlaubt die Berücksichtigung der Intersitätsverteilung innerhalb des Strahlenbündels, so daß bei regelmäßiger Messung und Berücksichtigung dieser Verteilung sich eine verbesserte Stabilität des Signals oder der Signale erzielen läßt, da Driften der Lichtquelle und des folgenden Beleuchtungssystems ausreferenziert werden können.

Es ist ferner vorteilhaft, wenn die Proben durch die Trägerplatte hindurch senkrecht oder schräg bestrahlt werden. Inbesondere bei schräger Einstrahlung werden störende Reflexe an der Substratplatte oder an der Trägerplatte wirksam minimiert.

Es ist auch möglich, die Substratplatte mit der darauf befindlichen Probe auf der Hypotenusenfläche eines rechtwinkligen Prismas anzuordnen, wobei durch die eine Kathetenfläche des Prismas das beleuchtende Lichtbündel einkoppelbar und durch die andere Kathetenfläche der Meß- und Referenzstrahlengang auskoppelbar sind. Auch kann ein gleichschenkliges Prisma zum Einsatz kommen. Mit dieser Ausführung können mit Einfallswinkeln, die größer als der Grenzwinkel der inneren Totalreflexion sind, evaneszente Felder erzeugt werden. Damit ist die Einrichtung auf Biosensoren mit Oberflächenplasmonresonanz oder mit Resonanzreflektoren anwendbar.

Es ist weiterhin vorteilhaft, wenn in dem Raum zwischen der Trägerplatte und der Substratplatte eine Substanz mit einem geeigneten Brechungsindex zur Anpassung der Brechungsindices der optisch verbundenen Teile eingefügt ist. Damit können vor allem störende Reflexe beseitigt oder wesentlich minimiert und auch Lichtverluste vermieden werden.

Die Erfindung wird nachstehend in einem Ausführungsbeispiel näher erläutert. In der zugehörigen Zeichnung zeigen:
- Fig. 1: ein Blockschaltbild einer erfindungsgemäßen Einrichtung;
- Fig. 2: eine Einrichtung ohne Referenzstrahlengang mit senkrechter Probenbestrahlung;
- Fig. 3: eine Einrichtung mit senkrechter Probenbestrahlung und Referenzstrahlengang;
- Fig. 4: eine Einrichtung mit schräger Probenbestrahlung und Referenzstrahlengang;
- Fig. 5: eine Einrichtung mit keilförmiger Trägerplatte ohne Referenzstrahlengang;
- Fig. 6: eine Einrichtung mit keilförmiger Trägerplatte mit Referenzstrahlengang;
- Fig. 7: eine Einrichtung mit Prismenkoppler und Keilplatte;
- Fig. 8: den beispielsweisen Aufbau einer Trägerplatte und die Anordnung der Substratplatte und,
- Fig. 9: eine teleskopische Abbildungsoptik der Einrichtung mit Blendenumstellung.

Das Verfahren zum Nachweis physikalischer, chemischer, biologischer und/oder biochemischer Reaktionen und Wechselwirkungen an und/oder in Proben, die auf einer Substratplatte mit einer Trägerschicht einer Trägerplatte angeordnet sind und über Einkoppelelemente mit Licht einer polychromatischen Lichtquelle bestrahlt werden, umfaßt eine zeitlich aufgelöste Bestrahlung oder Beleuchtung einer flächenhaften Anordnung einer Vielzahl von zu untersuchenden Proben mit Licht unterschiedlicher Wellenlänge einer durchstimmbaren Lichtquelle oder eines scannenden Monochromators, der dann einer polychromatischen Lichtquelle nachgeordnet ist. In einem weiteren Verfahrensschritt erfolgt die Abbildung des an mindestens einer Grenzfläche einer jeden Probe reflektierten Strahlenanteils oder der an in Lichtrichtung hintereinanderliegenden Begrenzungsflächen einer jeden Probe reflektierten bzw. interferierenden Strahlenanteile bzw. Interferenzen durch nachgeordnete optische Elemente auf ein ortsauflösendes, flächenhaftes Detektorarray oder eine Videokamera. Es erfolgt in einem folgenden Schritt eine wellenlängenselektive Detektion der durch die Proben beeinflußten reflektierten Strahlungsintensitäten bzw. der Intensitäten der abgebildeten Interferenzen, die Ermittlung eines einer jeden Probe zugeordneten Wellenlängenspektrums sowie die Ableitung von Parametern, die die zu untersuchenden Wechselwirkungen und Reaktionen kennzeichnen.

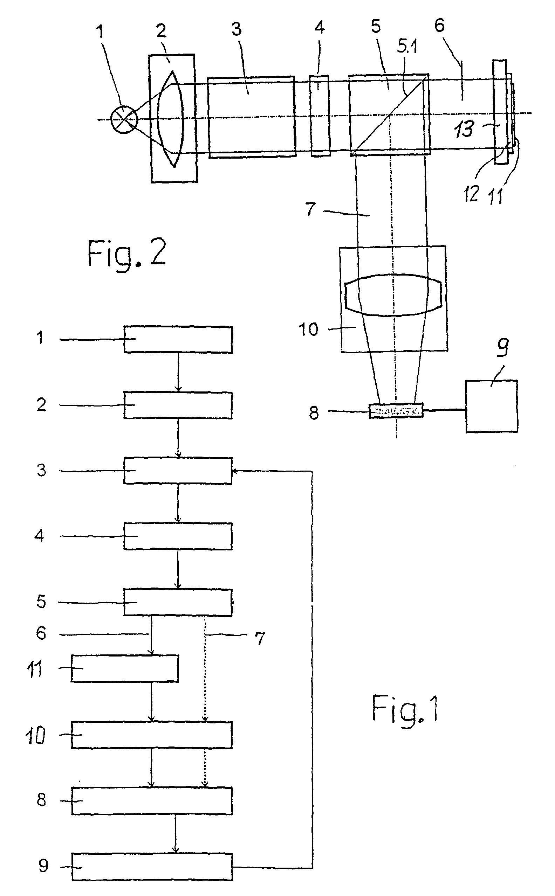

In den folgenden Figuren 1 bis 9 bezeichnen gleiche Bezugszeichen gleiche oder gleichwirkende Elemente.

Gemäß dem in Fig. 1 dargestellten Blockschaltbild umfaßt die erfindungsgemäße Einrichtung eine polychromatische Lichtquelle 1, welche Licht mindestens einer Wellenlänge aussendet Über einen nachgeordneten Kollimator 2 und einen Monochromator 3, welcher monochromatisches Licht bestimmter Wellenlängen erzeugt, und über einen Polarisator 4 wird Licht definierter Polarisation direkt oder über einen Strahlenteiler 5 in einem Meßstrahlengang 6 auf die Probe 11 geleitet. Wird eine durchstimmbare Lichtquelle 1 verwendet, z. B. ein durchsämmbarer Laser, kann auf den Monochromator verzichtet werden, da dann die zu verwendende Wellenlänge an der Lichtquelle eingestellt wird. Durch den Strahlenteiler 5 wird weiterhin ein Referenzstrahlengang 7 erzeugt. Das an der Oberfläche der Probe 11 reflektierte und durch die Probe beeinflußte Licht und der Referenzstrahlengang werden durch eine nachgeordnete Abbildungoptik 10 auf mindestens eine fotoelektrische Detektoranordnung 8 abgebildet, welche mit einer Auswerteeinrichtung 9 verbunden ist. Auf den Strahlenteiler 5 kann auch verzichtet werden, wenn nur das von der Probe 11 beeinflußte Licht ausgewertet werden soll.

Die Auswerteeinrichtung 9 oder ein Rechnersystem zur Steuerung, Datenerfassung und Auswertung erlaubt die Auswahl von mehr als einer Beobachtungswellenlänge und die Zuordnung von Reflektivitäten zu Positionen auf der die Proben 11 tragenden Substratplatte. Aus den Änderungen im spektralen Reflexionsvermögen der Proben, gegebenenfalls auch unter Einbeziehung von im Referenzstrahlengang erzeugter Referenzsignale, werden die oben genannten Reaktionen und Wechselwirkungen an den Proben detektiert und quantifiziert.

Die in Fig. 2 in einem Optikschema dargestellte Einrichtung besitzt die Lichtquelle 1, deren ausgestrahltes Licht durch einen Kollimator 2 parallelisiert wird. Ein dem Kollimator 2 nachgeschalteter Monochromator 3 erzeugt monochromatisches Licht, welches über einen einen gewünschten Polarisationszustand herstellenden Polarisator 4 und einen Strahlenteiler 5 mit einer strahlenteilenden, teildurchlässigen Schicht 5.1 senkrecht auf die zu untersuchende Probe 11 gelenkt wird. Die Probe 11 ist auf einer Substratplatte 12 aufgebracht, welche sich auf einer transparenten Trägerplatte 13 befindet. So kann z. B. die Probe 11 an ein an sich bekanntes Schichtsystem gebunden werden, welches sein spektrales Reflexionsverhalten in Abhängigkeit von der Schichdicke oder dem lokalen Brechungsindex ändert. Für Anwendungen in Bereich biomolekularer Interaktion wird eine als Sensor dienende Sensorschicht mit einer flüssigen, typischerweise wässrigen Probe beaufschlagt. Aus der Probe heraus können sich beispielsweise biologische und auch andere Komponenten selektiv oder auch unselektiv an diese Sensorschicht binden. Die einzelnen Proben 11 können auf der Substratplatte 12 in einer Vielzahl matrixartig aufgebracht sein. Weiterhin können auf einer solchen Sensorschicht mit Probe durch ortsaufgelöste Belegung mit verschiedenen, z.B. biologisch relevanten Molekülen Spezifitäten erzeugt werden. Hier kann auch bei Beschickung der gesamten Sensorschicht mit einer einheitlichen Probe eine Information über verschiedene Bindungsvorgänge erhalten werden. Weiterhin erlaubt ein Vergleich vorbehandelter und nicht vorbehandelter Areale auf der Oberfläche der die Probe beinhaltenden Schicht auf der Substratplatte 12 die Diskriminierung von spezifischen und unspezifischen Bindungseffekten. Solche an sich bekannte Schichtsysteme, die je nach Belegung mit zu untersuchenden Proben eine Änderung ihres spektralen Reflexionsvermögens zeigen, sind Gitterkoppler, dünne Edelmetallschichten, Prismenkoppler/Schichtwellenleiter oder Fabry-Perot-Kavitäten. So ergibt sich für die genannten Schichtsysteme ein Extremum der Reflektivität, dessen charakteristische Wellenlänge von den aktuellen Bedingungen an der Sensorschicht abhängt.

Das von der probentragenden Oberfläche der Substratplatte reflektierte und durch die Probe 11 beeinflußte Strahlenbündel durchläuft die Trägerplatte und wird durch die strahlenteilende Schicht 5.1 umgelenkt und durch eine Abbildungsoptik 10 auf eine Detektoranordnung 8, die mit der Auswerteeinrichtung 9 verbunden ist, abgebildet. Die Detektoranordnung 8 umfaßt eine Vielzahl diskreter fotoelektrische Empfänger, vorzugsweise CCD-Elemente, die matrixartig angeordnet sind und so eine ortsauflösende flächenhafte Detektoranordnung ergeben. Durch die Abbildung ist eine Zuordnung von Positionen von Proben auf der Substratplatte 12 zu den einzelnen Empfängern der Detektoranordnung 8 möglich. Gegebenenfalls können im Strahlengang auch Blendensysteme (nicht dargestellt) vorgesehen werden, um Störlicht, welches nicht direkt von der Substratplatte 12 und damit von der Probe 11 kommt, auszublenden.

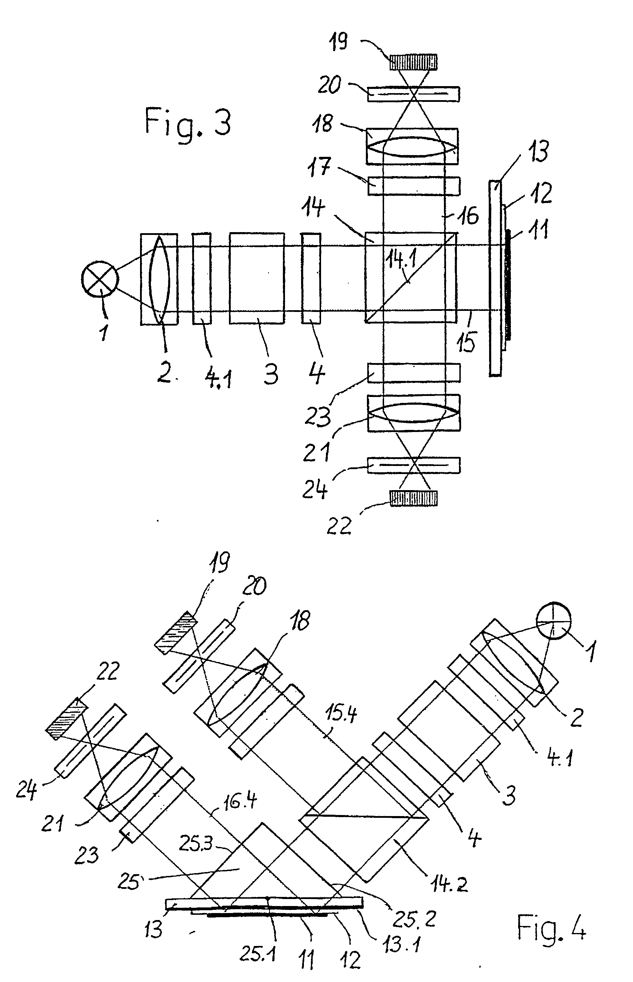

Bei der in Fig. 3 schematisch dargestellten Einrichtung wird ebenfalls die Probe 11 senkrecht bestrahlt. Das von der Lichtquelle 1 ausgehende, einen Kollimator 2, einen Monochromator 3 und Polarisatoren 4 und 4.1 passierende Lichtbündel wird durch einen Strahlenteiler 14 in einen Meßstrahlengang 15 und eine Referenzstrahlengang 16 aufgesplittet. Das den Referenzstrahlengang 16 bildende Teilbündel wird, von der Probe 11 unbeeinflußt, z. B. über einen Polarisator 17, durch ein Abbildungssystem 18 auf eine Detektoranordnung oder eine CCD-Kamera 19 abgebildet. Durch eine Blende 20 kann Störlicht ausgeschaltet werden. Das an der die Probe 11 reflektierte und durch die Probe 11 beeinflußte, den Meßstrahlengang 15 bildende Teilbündel wird an der reflektierenden Schicht 14.1 des Strahlenteilers 14 umgelenkt und durch ein Abbildungsystem 21 auf eine weitere, als Detektoranordnung dienende CCD-Kamera 22 abgebildet, wobei im Meßstrahlengang 15 ebenfalls ein Polarisator 23 und eine Blende 24 vorgesehen sind. Die beiden CCD-Kameras 19 und 22 sind ebenfalls mit einer Auswerteeinrichtung (nicht dargestellt) verbunden.

Durch die Verwendung eines Referenzstrahlenganges 16 zur Erzeugung von Referenzsignalen kann z. B. der Intensitätsverteilung in Strahlenbündel Rechnung getragen werden. Bei regelmäßiger Messung und Beachtung dieser Verteilung kann eine Signalstabilisierung errreicht werden, da Driften der Lichtquelle 1 und des weiteren Beleuchtungsstrahlenganges ausreferenziert werden können. Diese Referenzierung erfolgt beispielsweise durch Normalisierung der für die Fläche der Probe 11 gefundenen Intensitäten auf die korrespondierenden Werte für den Referenzstrahlengang 16.

Eine Einrichtung, mit welcher die Probe 11 in einem schrägen Strahlengang beleuchtet wird und welche einen Referenzstrahlengang 15 umfaßt, ist in Fig. 4 dargestellt. Das von der Lichtquelle 1 ausgesandte Licht wird auch hier analog zu der Einrichtung nach Fig. 3 durch einen Strahlenteiler 14.2 in einen Meßstrahlengang 16.4 und einen Referenzstrahlengang 15.4 aufgeteilt, wobei das Strahlenbündel des Referenzstrahlenganges 15.4 auf eine CCD-Kamera 19 oder Detektoranordnung abgebildet wird. Im Meßstrahlengang 16.4 ist ein Einkoppelprisma 25 vorgesehen, auf dessen Hypotenusenfläche 25.1 die Trägerplatte 13 mit Substratplatte 12 und darauf befindlicher Probe 11 angeordnet ist, wobei durch die eine Kathetenfläche 25.2 das beleuchtende Lichtbündel eintritt und durch die andere Kathetenfläche 25.3 das von der Probe 11 beeinflußte Lichtbündel austritt. Durch die Verwendung des Einkoppelprismas 25 werden Einfallswinkel größer als der Grenzwinkel der Totalreflexion einstellbar, um ein evaneszentes Feld in der Probe und der darunter liegenden Resonanzstruktur 13.1 (z. B. Wellenleiter, dünner Metallfilm) zu erzeugen. Vorteilhaft ist es, eine Substanz zur Brechzahlanpassung zwischen dem Einkoppelprisma 25 und der Trägerplatte 13 und zwischen der Trägerplatte 13 und der Substratplatte 12 vorzusehen. Alternativ ist auch eine Vergütung aller Oberflächen mit einer reflexmindernden zur Vermeidung störender Reflexe möglich. Anstelle eines 90°-Prismas, wie es in Fig. 4 dargestellt ist, kann auch ein Prisma mit einem von 90° abweichenden Winkel oder ein gleichschenkliges Prisma im Strahlengang vorgesehen werden.

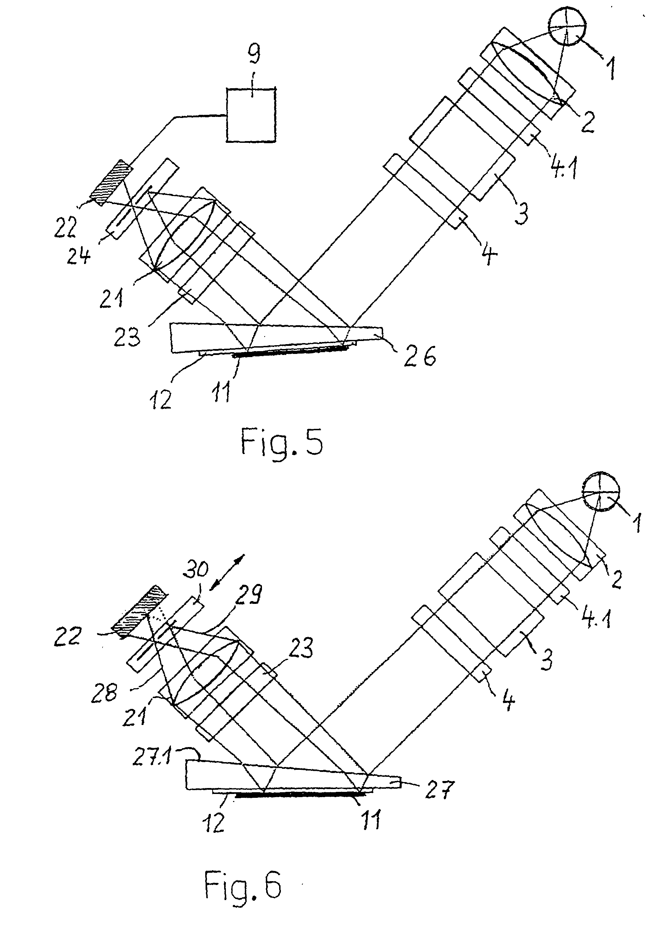

Eine Einrichtung mit keilförmiger Trägerplatte 26 anstelle eines Einkoppelprismas mit aufgesetzter planparalleler Trägerplatte (13 in Fig. 4) ist in Fig. 5 veranschaulicht. Bei dieser Einrichtung ist ein Referenzstrahlengang nicht vorgesehen, und die Beleuchtung der Probe 11 erfolgt über die gleichen strahlenführenden und -formenden optischen Elemente wie sie im Zusammenhang mit der Beschreibung der Fig. 4 genannt wurden. Der Lichtquelle 1 sind somit ein Kollimator 2 und ein Monochromator 3, beispielsweise ein an sich bekanntes Lyot-Filter, nachgeordnet. Die dargestellten Polarisatoren 4 und 4.1 dienen der Auswahl der Polarisationsrichtungen des beleuchtenden Strahlenganges. Die Proben 11 sind z. B. wiederum auf einer Substratplatte 12 aufgebracht, wobei die Substratplatte 12 auf der keilförmigen Trägerplatte 26, vorzugsweise unter Zwischenschaltung einer Substanz zur Brechungsindexanpassung, angeordnet ist. Diese Substanz ist in Fig. 5 nicht dargestellt. Die Proben 1 1 werden schräg beleuchtet. Das von der die Proben 1 1 tragenden Oberfläche der Substratplatte 12 reflektierte und durch die Proben beeinflußte Lichtbündel wird , wie es weiter oben bereits beschrieben wurde, auf die CCD-Kamera 22 oder eine andere geeignete flächenhafte Detektoranordnung abgebildet, welche mit einer Auswerteeinrichtung 9 in Verbindung steht.

In Gegensatz zu der Einrichtung nach Fig. 5 ist bei der in Fig. 6 dargestellten erfindungsgemäßen Einrichtung eine keilförmige Trägerplatte 27 vorgesehen, deren, der Lichtquelle 1 zugewandte Oberfläche 27.1 es ermöglicht, einen Meßstrahlengang 28 und einen Referenzstrahlengang 29 zu erzeugen, wobei sie über den vorgesehenen Spektralbereich (beispielsweise 400 - 800 Nm) so verspiegelt ist, daß die Intensität der Referenzstrahlung annähernd gleich der der Meßstrahlung ist. Der Keilwinkel der Trägerplatte 27 ist in der Größenordnung kleiner als 2°. Das von der Lichtquelle 1 ausgesendete Licht wird durch zwischengeschaltete optische Elemente schräg auf die Trägerplatte 27 eingestrahlt. Das an der Oberfläche 27.1 reflektierte Lichtbündel bildet den Referenzstrahlengang 29 und wird über den Polarisator 23 durch das Abbildungsystem 21 auf die CCD-Kamera 22 abgebildet. Das die keilförmige Trägerplatte 27 und die darauf befindliche Substratplatte 12 passierende, den Meßstrahlengang 28 bildende Lichtbündel wird an der die Proben 11 tragenden Oberfläche der Substratplatte 12, durch die Proben beeinflußt, reflektiert und wird durch die gleichen. Elemente wie der Referenzstrahlengang 29 auf die CCD-Kamera 22 abgebildet. Durch die Verwendung der keilförmigen Trägerplatte 27 und durch die Reflexion des Lichtes an in Lichtrichtung in unterschiedlichen Ebenen liegenden Flächen wird ein Winkel zwischen dem Meß- und dem Referenzstrahlengang erzeugt mit dem Ergebnis, diese Strahlengänge zu trennen und damit die an unterschiedlichen Positionen auf der CCD-Kamera 22 oder der Detektoranordnung auftreffenden Strahlenanteile mittels eines vorgeschalteten Blendensystems 30 alternierend zu trennen. Beispielsweise können durch eine Verschiebung des Blendensystems 30 alternierend Meß- und Referenzstrahlengang ausgewertet werden.

Die in Fig. 6 dargestellte Einrichtung ermöglicht auch, von der Schichtdicke der Proben 11 abhängende Interferenzen aufzunehmen und entsprechend auszuwerten. Diese Interferenzen entstehen durch Reflexion des Lichtes an der die Proben 11 tragenden Oberfläche der Substratplatte 12 und an der freien Oberfläche der Proben 11. Aus den bei unterschiedlichen Wellenlängen erzeugten Interferenzen kann die Schichtdicke ermittelt werden, welche ein Maß für die zu untersuchenden Reaktionen und Wechselwirkungen darstellt.

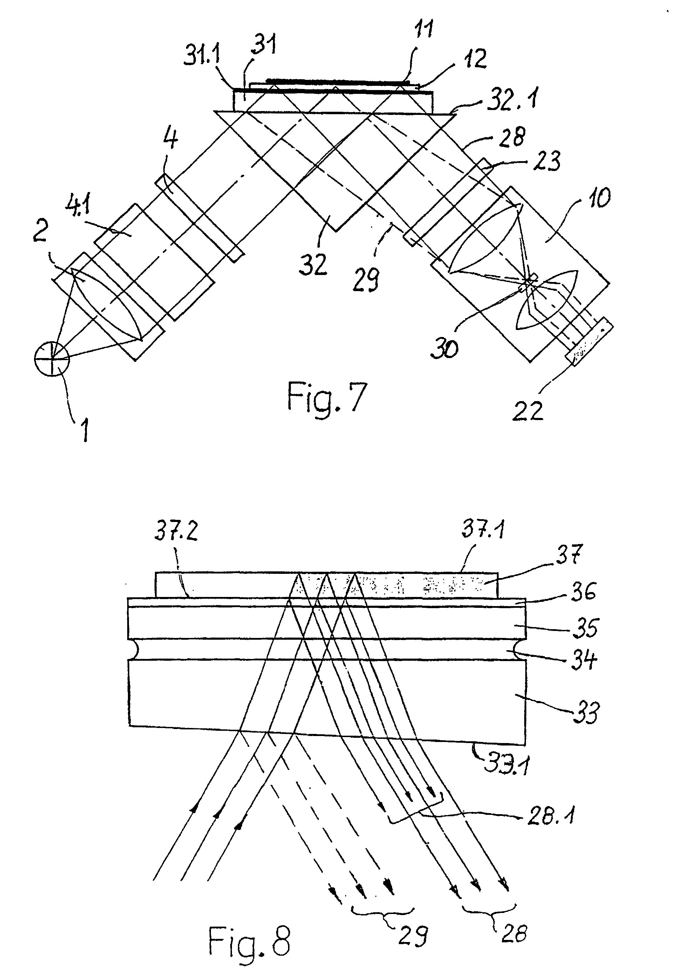

In Fig. 7 ist eine Einrichtung mit keilförmiger Trägerplatte 31 mit einer Resonanzstruktur 31.1 dargestellt, wobei diese Trägerplatte 31 auf der Hypotenusenfläche 32.1 eines Koppelprismas 32, vorteilhaft unter Zwischenschaltung einer die Brechzahlen der verbundenen Teile anpassenden Substanz, angeordnet ist. Durch die Wirkung der keilförmigen Trägerplatte 31 wird auch hier ein Winkel zwischen dem Meßstrahlengang 28 und dem Referenzstrahlengang 29 erzeugt, so daß eine Trennung dieser Strahlengänge an unterschiedlichen Postionen auf der Detektoranordnung oder CCD-Kamera 24 ermöglicht wird. Durch eine zwischengeschaltete und vorteilhaft verschiebbare Blende 30 können die beiden Strahlengänge abwechselnd zur Abbildung gebracht werden. Diese Einrichtung ist besonders geeignet, um eine Vielzahl gleichzeitiger Messungen zum Nachweis von Reaktionen und Wechselwirkungen oben dargelegter Art unter Ausnutzung der Oberflächenplasmonresonanz durchzuführen, wobei das Koppelprisma 32 der verlustarmen Ein- und Auskopplung der Strahlengänge dient. Die dargestellten Polarisatoren 4 und 4.1 sind zur Auswahl der Polarisationsrichtungen der beleuchtenden Strahlengänge vorgesehen. Üblicherweise wird die senkrecht zur Einfallsebene der Strahlen liegende Polarisationsebene verwendet. Anordnungen sind auch denkbar, bei denen Im Einkoppelstrahlengang eine unter 45 Grad liegende Polarisationsebene gewählt wird. Im Auskoppelstrahlengang wird dann der Polarisator 23 um 90 Grad in Bezug auf den Polarisator 4 gedreht.

In Fig. 8 ist eine keilförmige Trägerplatte 33 gezeigt, auf welcher unter Zwischenschaltung einer der Brechungsindexanpassung dienenden Substanz 34 die Substratplatte 35 angeordnet ist. Die Substratplatte 35 trägt vorteilhaft ebenfalls unter Zwischenschaltung einer weiteren Substanz 36 eine beispielsweise biospezifische oder chemospezifische Schicht 37, auf oder in welcher die zu untersuchenden Probe sich befindet. Die der Lichtquelle zugewandte Fläche 33.1 ist teildurchlässig verspiegelt. Das an ihr reflektierte, durch die Probe unbeeinflußte Licht bildet den Referenzstrahlengang 29, das an der Oberfläche 37.1 reflektierte und durch die Probe beeinflußte Licht bildet den Meßstrahlengang 28. Die Probe kann die Schicht oder die Eigenschaften derselben u. a. in der Weise beeinflussen, daß die Reflektivität der Oberfläche 37.1 oder die Schichtdicke verändert werden und ein Maß für zu untersuchende Reaktion oder Wechselwirkung sind.

Die Anordnung nach Fig. 8 zeigt den Strahlenverlauf, wie er bei der Bestimmung der Reflektivität der Schicht 37 realisiert ist. Bewirkt z. B. die Probe eine Dickenveränderung der Schicht 37, so werden die an den beiden Oberflächen 37.1 und 37.2 reflektierten Strahlenbündel 28 und 28.1 zur Interferenz gebracht, diese Interferenzen auf die Empfängeranordnung abgebildet und die erzeugten Signale weiterverarbeitet.

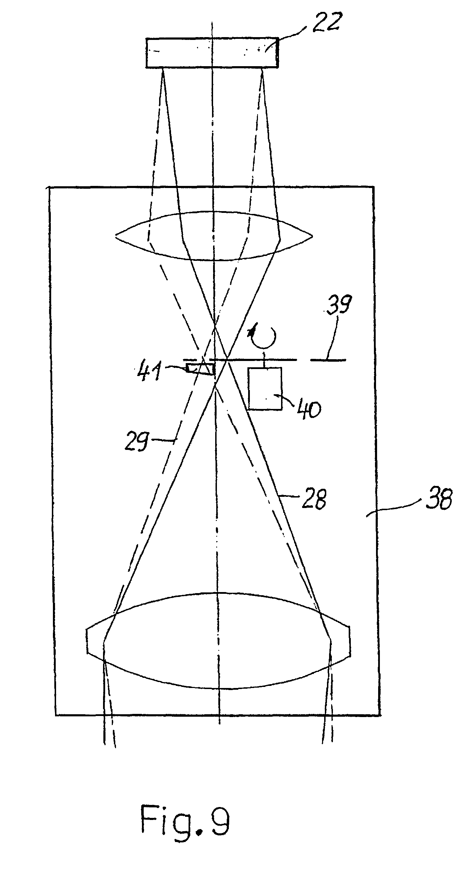

Fig. 9 zeigt den Strahlengang einer teleskopischen Abbildungsoptik 38 mit der Möglichkeit einer Blendenumstellung. Dabei ist in einer Fokusebene, in der Meß- und Referenzstrahlengang abgebildet werden, eine verstellbare Blende 39 vorgesehen, welche vorzugsweise durch einen Antrieb 40 schaltbar in der Weise ist, daß alternativ Meß- und Referenzstrahlengang auf die Detektoranordnung 8 abbildbar sind. Durch ein Ablenkprisma 41 im Referenzstrahlengang 29 wird erreicht, daß der Meßstrahlengang 28 und der Referenzstrahlengang 29 an gleichem Ort auf der Detektoranordnung 8 abgebildet wird. Dieses Ablenkprisma 41 kompensiert die durch die in Fig. 9 nicht dargestellte keilförmige Trägerplatte erzeugte Ablenkung (Divergenz) der beiden Strahlengänge 28 und 29 auf der Detektorebene, womit auch unterschiedliche Empfindlichkeiten der pixelförmigen Empfänger ausreferenziert werden können.

## Patentansprüche

1. Verfahren zum Nachweis physikalischer, chemischer und/oder biochemischer Reaktionen und Wechselwirkungen an und/oder in Proben, die auf einer Substratplatte mit Trägerschicht einer Trägerplatte angeordnet sind und über Einkoppelelemente mit Licht bestrahlt werden, mit
- Beleuchtung einer flächenhaften Anordnung von zu untersuchenden Proben mit Licht einer durchstimmbaren Lichtquelle (1) oder eines scannenden Monochromators, der einer polychromatischen Lichtquelle (1) nachgeordnet ist, wobei eine zeitlich aufgelöste Beleuchtung mit Licht unterschiedlicher Wellenlängen erfolgt,
- Abbildung des an mindestens einer Grenzfläche einer jeden Probe (11) reflektierten Strahlenanteils oder der an in Lichtrichtung hintereinander liegenden Begrenzungsflächen einer jeden Probe reflektierten und interferierenden Strahlenanteile bzw. Interferenzen durch optische Elemente auf ein ortsauflösendes, flächenhaftes Detektorarray (8) oder eine Videokamera,
- gemäß der zeitlich aufgelösten Beleuchtung eine wellenlängenselektive Detektion der durch die Proben (11) beeinflußten reflektierten Strahlungsintensitäten bzw. der Intensitäten der abgebildeten Interferenzen,
- Ermittlung der einer jeden Probe (11) zugeordneten Intensität und des einer jeden Probe (11) zugeordneten Wellenlängespektrums und
- Ableitungen von Parametern, die die zu untersuchenden Wechselwirkungen und Reaktionen an und/oder in den einzelnen Proben kennzeichnen.

2. Einrichtung zum Nachweis physikalischer, chemischer und/oder biochemischer Reaktionen und Wechselwirkungen an und/oder in Proben, umfassend
- eine Lichtquelle und dieser nachgeordnete, das Licht kollimierende optische Elemente und diesen nachgeordnete Einkoppelelemente,
- eine matrixförmige Anordnung der zu untersuchenden Proben, derart, daß eine Bestrahlung aller Proben gleichzeitig realisierbar ist,
- erste optische Mittel, die das Licht der Lichtquelle auf die Proben lenken, und
- zweite optische Mittel, die das von jeder Probe reflektierte und durch jede Probe beeinflußtes Licht auf eine nachgeordnete, aus matrixartig angeordneten fotoelektrischen Empfängern bestehenden Detektoranordnung oder eine Videokamera zur ortsaufgelösten Detektion des von jeder Probe reflektierten und durch jede Probe beeinflußten Lichtes leiten, wobei die Detektoranordnung mit einer Auswerteeinrichtung verbunden ist, **gekennzeichnet durch** die Kombination folgender Merkmale:
- eine unstrukturierte Substratplatte (12) oder eine Trägerplatte (13), auf der die Vielzahl der zu untersuchenden Proben matrixartig angeordnet ist, wobei zumindest die der Substratplatte (12) bzw. Trägerplatte (13) zugewandte Begrenzungsfläche der Proben (11) zumindest teilreflektierend oder teilweise reflektierend ist,
- die Lichtquelle (1,9) sendet Licht mindestens einer Wellenlänge aus, wobei die Bestrahlung aller Proben (11) wellenlängenselektiv realisierbar ist, und
- die Detektoranordnung (8) oder die Videokamera nimmt die von jeder Probe (11) reflektierte, über einen bestimmten Spektralbereich beeinflußte und von Resonanzlage bzw. Schichtdicke der jeweiligen Probe (11) abhängende Strahlungsintensität ortsaufgelöst auf.

3. Einrichtung nach Anspruch 2, **dadurch gekennzeichnet,**
**daß** die in Lichtrichtung hintereinanderliegenden Begrenzungflächen der Proben (11) mindestens teilreflektierend sind und die, aus diesen an den Begrenzungsflächen reflektierten Strahlen erzeugten Interferenzen auf die Detektoranordnung (8) abbildbar sind.

4. Einrichtung nach Anspruch 2, **dadurch gekennzeichnet,**
**daß** die in Lichtrichtung hintereinanderliegenden optisch wirksamen Flächen der Trägerplatte (33) parallel verlaufen oder einen kleinen Winkel einschließen und durchlässig verspiegelt sind.

5. Einrichtung nach mindestens einem der Ansprüche 2 bis 4, **dadurch gekennzeichnet,**
**daß** die Bestrahlung der Proben (8) durch die Trägerplatte (13; 26; 31; 33) hindurch erfolgt.

6. Einrichtung nach Anspruch 2 bis 5, **dadurch gekennzeichnet,**
**daß** eine senkrechte oder schräge Bestrahlung der Proben (8) vorgesehen ist.

7. Einrichtung nach mindestens einem der Ansprüche 2 bis 6, **dadurch gekennzeichnet,**
**daß** die durchlässig verspiegelten Oberflächen der Probeneaufnahme einen kleinen Winkel einschließen und damit eine Aufspaltung der an der Trägerplatte reflektierten und zur Interferenz gebrachten Strahlung in einen Meß- (28) und einen Referenzstrahlengang (29) realisiert ist, wobei dem Meß- (28) und dem Referenzstrahlengang (29) mindestens eine flächenhafte Detektoranordnung zugeordnet ist.

8. Einrichtung nach mindestens einem der Ansprüche 2 bis 7, **dadurch gekennzeichnet,**
**daß** dem Meß- (16.4) und dem Referenzstrahlengang (15.4) jeweils eine Detektoranordnung zugeordnet ist.

9. Einrichtung nach mindesten einem der Ansprüche, 2 bis 8, **dadurch gekennzeichnet,**
**daß** ein durch Reflexion des eingestrahlten Lichtes an den Oberflächen der Trägerplatte erzeugter Referenzstrahlengang (29) und ein durch Reflexion und Interferenz des eingestrahlten Lichtes an einer Oberfläche der Probeneinrichtung und an der Probenoberfläche erzeugter und durch die Schichtdicke der Probe beeinflußter Meßstrahlengang (28) vorgesehen sind
und **daß** der Trägerplatte ein teleskopisches Abbildungssystem zur Abbildung des Meß-(28) und Referenzstrahlenganges (29) auf eine Blendenanordnung (39) bzw. auf die Detektoranordnung (22) vorgesehen ist, wobei die Blendenanordnung der Detektoranordnung (22) vorgeordnet ist.

10. Einrichtung nach Anspruch 9, **dadurch gekennzeichnet,**
**daß** die Blendenanordnung (39) umschaltbar ist, derart, daß jeweils der Meß- (28) oder der Referenzstrahlengang (29) auf die Detektoranordnung (22) abbildbar ist.

11. Einrichtung nach mindestens einem der Ansprüche 2 bis 10, **dadurch gekennzeichnet,**
**daß** die Substratplatte mit der darauf befindlichen Probe über einer resonanzfähigen Struktur eines Wellenleiters oder eines Oberflächenplasmonresonators auf der Hypotenusenfläche (25.1; 32.1) eines rechtwinkligen Prismas (25; 32) oder gleichschenkligen Prismas angeordnet ist, wobei durch die eine Kathetenfläche (25.2) des Prismas (25; 32) das beleuchtende Lichtbündel einkoppelbar und durch die andere Kathetenfläche (25.3) der Meß- (28) und/oder Referenzstrahlengang (29) auskoppelbar sind.

12. Einrichtung nach mindestens einem der Ansprüche 2 bis 11, **dadurch gekennzeichnet,**
**daß** in dem Raum zwischen der Trägerplatte (33) und der Substratplatte (36) zur Vermeidung störender Reflexe und zur Brechzahlanpassung eine Substanz (34) mit einem geeigneten Brechungsindex eingelagert ist.

13. Einrichtung nach Anspruch 2, **dadurch gekennzeichnet,**
**daß** Schichtsysteme in Form von Gitterkopplern, dünnen Edelmetallschichten, Prisnnenkopplern mit Schichtwellenleiter oder Fabry-Perot-Kavitäten zur Aufnahme der zu untersuchenden Proben und Wechselwirkungen vorgesehen sind.

## Claims

1. Procedure for the detection of physical, chemical and/or biochemical reactions and interactions on and/or in samples which are arranged on a substrate plate with a support layer on a support plate and irradiated with light through in-coupling elements, with
- illumination of a flat arrangement of samples under investigation with light from a variable light source (1) or a scanning monochromator located downstream from a polychromatic slight source (1) with a time-resolved illumination with light of different wavelengths taking place,
- imaging of the beam part reflected on at least one boundary surface of each sample (11) or the reflected and interfering beam parts or interferences on boundary surfaces of each sample lying in tandem in the direction of light by optical elements on a locally resolving, flat detector array (8) or a video camera,
- according to the time-resolved illumination of a wavelength-selective detection of the reflected beam intensities influenced by the samples (11) or the intensities of the imaged interferences,
- determination of the intensity assigned to each sample (11) and the wavelength spectrum assigned to each sample (11) and
- derivation of parameters characterising the interactions and reactions to be investigated on and/or in the individual samples.

2. Device for the detection of physical, chemical and/or biochemical reactions and interactions on and/or in samples comprising
- a light source and optical elements downstream from this collimating the light and in-coupling elements downstream from these
- a matrix-shaped arrangement of the samples under investigation of such a kind that the irradiation of all the samples simultaneously is possible
- first optical means which direct the light from the light source onto the samples, and
- second optical means which guide the light reflected from each sample and influenced by each sample to a downstream detector arrangement comprising a matrix type arrangement of photoelectric receivers or a video camera for locally resolved detection of the light reflected from each sample and influenced by every sample, with the detector arrangement being connected to an evaluation device, **characterised by** a combination of the following features:
- an unstructured substrate plate (12) or a support plate (13) on which the large number of samples, with at least the boundary surface surface of the samples (11) facing the substrate plate (12) or support plate (13) being at least part-reflecting or partially reflecting,
- the light source (1,9) emits light of at least one wavelength, with the wavelength-selective irradiation of all samples (11) being possible, and
- the detector arrangement (8) or the video camera records the intensity of radiation reflected by every sample (11) influenced over a specific spectral range and determined by the resonance position or layer thickness of the sample in question (11).

3. Device according to claim 2, **characterised by** the fact that the boundary surface areas of the samples (11) lying in tandem in the direction of light are at least partially reflecting and the interferences generated from these beams reflected at the boundary surface surfaces may be imaged on the detector arrangement (8).

4. Device according to claim 2, **characterised by** the fact that the optically effective surfaces of the support plate (33) lying in tandem in the direction of light run in parallel or enclose a small angle and are partially mirrored.

5. Device according to at least one of claims 2 to 4, **characterised by** the fact that the irradiation of the samples (8) takes place through the support plate (13, 26, 31, 33).

6. Device according to claims 2 to 5, **characterised by** the fact that a vertical or oblique irradiation of the samples (8) is provided.

7. Device according to one of claims 2 to 6, **characterised by** the fact that the partially transparent surfaces of the sample holder include a small angle and hence the division of the radiation reflected in the support plate and brought to interference in a measuring (28) and a reference (29) beam path is realised with at least one detector arrangement being assigned to the measuring (28) and the reference (29) beam paths.

8. Device according to at least one of claims 2 to 7, **characterised by** the fact that a detector arrangement is assigned to both the measuring (16.4) and reference beam path (15.4).

9. Device according to at least one of claims 2 to 8, **characterised by** the fact that a reference beam path (29) generated by reflection of the irradiated light on the surfaces of the support plate and a measuring beam path (28) generated by reflection and interference of the beamed light on one surface of the sample device and on the sample surface and influenced by the layer thickness of the specimen are provided and that the support plate is provided with a telescopic imaging system for the imaging of the measuring (28) and reference (29) beam paths on a diaphragm arrangement (39) or on the detector arrangement (22), with the diaphragm arrangement being located upstream to the detector arrangement (22).

10. Device according to claim 9, **characterised by** the fact that the diaphragm arrangement (39) may be switched over in such a way that both the measuring (28) and the reference (29) beam paths may be imaged on the detector arrangement (22).

11. Device according to at least one of claims 2 to 10, **characterised by** the fact that the substrate plate with the superposed sample is arranged over a surface plasmon resonator on the hypotenuse surface (25.1, 32.1) of a rectangular prism (25, 32) or isosceles prism with it being possible to couple in the illuminating light bundle through one short face (25.2) of the prism (25, 32) and to couple out the measuring (28) and/or reference (29) beam path through the other short face (25.3).

12. Device according to at least one of claims 2 to 11, **characterised by** the fact
that a substance (34) with a suitable refractive index is interpolated in the space between the support plate (33) and the substrate plate (36) to avoid unwanted reflexes and for refractive index adaptation.

13. Device according to claim 2, **characterised by** the fact that layer systems in the form of grating couplers, thin noble metal layers, prism couples with layer waveguides or Fabry-Perot cavities are provided to record the samples and interactions under investigation.

## Revendications

1. Procédé pour déceler des réactions et interactions physiques, chimiques et/ou biochimiques sur et/ou dans des éprouvettes qui sont disposées sur une plaque de substrat avec couche de support d'une plaque de support, et qui sont exposées à un rayonnement lumineux par l'intermédiaire d'éléments d'alimentation, avec
- éclairage d'un agencement en surface d'échantillons à analyser avec la lumière d'une source lumineuse (1) variable ou d'un monochromateur de balayage en aval duquel est disposée une source lumineuse (1) polychrome, un éclairage à résolution temporelle s'effectuant avec une lumière de différentes longueurs d'onde,
- reproduction de la fraction des rayons réfléchis sur au moins une surface limite de chaque échantillon (11), ou des fractions de rayons réfléchis et interférant sur l'une des surfaces limites situées l'une derrière l'autre dans la direction de la lumière, de chaque échantillon, ou d'interférences, par des éléments optiques sur un ensemble de détecteurs (8) étendu, à résolution locale, ou une caméra vidéo,
- selon l'éclairage résolu dans le temps, une détection à sélection de longueur d'onde des intensités du rayonnement réfléchi, influencées par les échantillons (11) ou des intensités des interférences reproduites,
- détermination d'une intensité associée à chaque échantillon (11) et du spectre de longueur d'onde associé à chaque échantillon (11), et
- dérivations de paramètres qui caractérisent les interactions et réactions à analyser sur et/ou dans les différents échantillons.

2. Dispositif pour déceler des réactions et interactions physiques, chimiques et/ou biochimiques sur et/ou dans des échantillons, comportant
- une source lumineuse et des éléments optiques de collimation de la lumière, disposés en aval de celle-ci et des éléments d'alimentation disposés en aval de ces éléments optiques,
- une disposition en matrice des échantillons à analyser de manière que l'on puisse réaliser simultanément une irradiation de tous les échantillons,
- des premiers moyens optiques qui dirigent la lumière de la source lumineuse sur les échantillons, et
- des deuxièmes moyens optiques qui guident la lumière réfléchie et influencée par chaque échantillon sur un ensemble de détecteurs constitués de récepteurs photoélectriques disposés en aval, à la manière d'une matrice, ou une caméra vidéo pour la détection à résolution locale de la lumière réfléchie et influencée par chaque échantillon, l'ensemble de détecteurs étant relié à un dispositif d'exploitation, **caractérisé par** la combinaison des caractéristiques suivantes :
- une plaque de substrat (12) non structurée ou une plaque de support (13) sur laquelle est disposé en matrice le grand nombre d'échantillons à analyser, au moins la surface de délimitation des échantillons (11) tournée vers la plaque de substrat (13) ou la plaque de support (13) étant au moins partiellement réfléchissante ou en partie réfléchissante,
- la source lumineuse (1, 9) émet de la lumière d'au moins une longueur d'onde, l'irradiation de tous les échantillons (11) pouvant être réalisée avec sélection des longueurs d'onde, et
- l'agencement de détecteurs (8) ou la caméra vidéo reçoit, de manière résolue localement, l'intensité de rayonnement réfléchi par chaque échantillon (11), influencée sur un domaine spectral déterminé et dépendant de la position de résonance ou de l'épaisseur de couche de l'échantillon (11) considéré.

3. Dispositif selon la revendication 2, **caractérisé en ce que** les surfaces de délimitation, situées les unes derrière les autres dans la direction de la lumière, des échantillons (11), sont au moins partiellement réfléchissantes et les interférences produites sur l'ensemble de détecteurs (8), à partir de ces rayons réfléchis sur les surfaces de délimitation, peuvent être reproduites.

4. Dispositif selon la revendication 2, **caractérisé en ce que** les surfaces optiquement actives, disposées les unes derrière les autres dans la direction de la lumière, de la plaque de support (33), sont parallèles ou enferment un petit angle et sont des miroirs rendus réfléchissants transparents.

5. Dispositif selon l'une au moins des revendications 2 à 4, **caractérisé en ce que** l'irradiation des échantillons (8) s'effectue à travers la plaque de support (13 ; 26; 31 ; 33).

6. Dispositif selon les revendications 2 à 5, **caractérisé en ce qu'**il est prévu une irradiation verticale ou oblique des échantillons (8).

7. Dispositif selon l'une au moins des revendications 2 à 6, **caractérisé en ce que** les surfaces réfléchissantes transparentes du dispositif de réception d'échantillon forment un petit angle et il est réalisé ainsi la division du rayonnement réfléchi sur la plaque de support et amené à interférence, en un faisceau de rayons de mesure (28) et un faisceau de rayons de référence (29), au moins un ensemble de détecteurs étendu étant associé au faisceau de rayons de mesure (28) et au faisceau de rayons de référence (29).

8. Dispositif selon l'une au moins des revendications 2 à 7, **caractérisé en ce qu'**un ensemble de détecteurs est associé respectivement au faisceau de rayons de mesure (16.4) et au faisceau de rayons de référence (15.4).

9. Dispositif selon l'une au moins des revendications 2 à 8, **caractérisé en ce qu'**un faisceau de rayons de référence (29), produit par réflexion de la lumière émise, sur les surfaces de la plaque de support, et un faisceau de rayons de mesure (28) produit par réflexion et interférence de la lumière émise, sur une surface du dispositif à échantillons et sur la surface des échantillons, et influencé par l'épaisseur de couche de l'échantillon, sont prévus et **en ce qu'**après la plaque de support est prévu un système de reproduction télescopique pour reproduire le faisceau de rayons de mesure (28) et le faisceau de rayons de référence (29) sur un ensemble de diaphragmes (39) ou sur l'ensemble de détecteurs (22), l'ensemble de diaphragmes étant disposé en amont de l'ensemble de détecteurs (22).

10. Dispositif selon la revendication 9, **caractérisé en ce que** l'ensemble de diaphragmes (39) est commutable, de manière que le faisceau de rayons de mesure (28) ou le faisceau de rayons de référence (29) puisse être reproduit sur l'ensemble de détecteurs (22).

11. Dispositif selon l'une au moins des revendications 2 à 10, **caractérisé en ce que** la plaque de substrat avec l'échantillon se trouvant au-dessus est disposée, par une structure susceptible de résonance d'un guide d'onde ou d'un résonateur à plasmon de surface, sur la surface d'hypoténuse (25.1 ; 32.1) d'un prisme à angle droit (25 ; 32) ou d'un prisme isocèle, le faisceau de lumière d'éclairage pouvant être envoyé à travers une surface (25.2) de l'angle droit du prisme (25 ; 32), et le faisceau de rayons de mesure (28) et/ou le faisceau de rayons de référence (29) pouvant ressortir par l'autre surface (25.3) de l'angle droit.

12. Dispositif selon l'une au moins des revendications 2 à 11, **caractérisé en ce que** dans l'espace compris entre la plaque de support (33) et la plaque de substrat (36), une substance (34) d'un indice de réfraction approprié est intégrée pour éviter des réflexions gênantes et pour l'adaptation de l'indice de réfraction.

13. Dispositif selon la revendication 2, **caractérisé en ce que** sont prévus des systèmes à couches sous la forme de coupleurs à grille, de minces couches de métal précieux, de coupleurs à prisme avec des guides d'onde à couche ou des cavités de Fabry-Perot pour recevoir les échantillons et interactions à analyser.
